# EUROPÄISCHE PATENTSCHRIFT

(11) **EP 3 587 724 B1**
(45) Veröffentlichungstag und Bekanntmachung des Hinweises auf die Patenterteilung: **11.11.2020**
(21) Anmeldenummer: 19182806.0
(22) Anmeldetag: 27.06.2019
(51) Int. Cl.: E06B 7/084, A01K 1/00, E06B 7/086, E04H 5/08

(54) **BELÜFTUNGSKONSTRUKTION FÜR EINE WANDÖFFNUNG EINES FUNKTIONSGEBÄUDES, FUNKTIONSGEBÄUDE MIT EINER BELÜFTUNGSKONSTRUKTION UND VERFAHREN ZUM INSTALLIEREN UND/ODER BETREIBEN EINER BELÜFTUNGSKONSTRUKTION FÜR EINE WANDÖFFNUNG EINES FUNKTIONSGEBÄUDES**
VENTILATION STRUCTURE FOR A WALL OPENING OF A FUNCTIONAL BUILDING, FUNCTIONAL BUILDING COMPRISING A VENTILATION STRUCTURE AND METHOD FOR INSTALLING AND / OR OPERATING A VENTILATION STRUCTURE FOR A WALL OPENING OF A FUNCTIONAL BUILDING
CONSTRUCTION D'AÉRATION POUR UNE OUVERTURE DE PAROI D'UN BÂTIMENT FONCTIONNEL, BÂTIMENT FONCTIONNEL DOTÉ D'UNE CONSTRUCTION D'AÉRATION ET PROCÉDÉ D'INSTALLATION ET / OU DE FONCTIONNEMENT D'UNE CONSTRUCTION D'AÉRATION POUR UNE OUVERTURE DE PAROI D'UN BÂTIMENT FONCTIONNEL

(30) Priorität: 28.06.2018 DE 102018115664
(43) Veröffentlichungstag der Anmeldung: 01.01.2020
(73) Patentinhaber: Wolf System GmbH, 94486 Osterhofen (DE)
(72) Erfinder: ZEHRER, Hans-Jürgen, 94486 Osterhofen (DE)
(74) Vertreter: Benninger, Johannes

(56) Entgegenhaltungen:
- WO-A1-2013/113987
- DE-A1- 10 155 636
- JP-A- H04 237 445

## Beschreibung

Die vorliegende Erfindung betrifft eine Belüftungskonstruktion für eine Wandöffnung eines Funktionsgebäudes, ein Funktionsgebäude mit einer Belüftungskonstruktion und ein Verfahren zum Installieren und/oder Betreiben einer Belüftungskonstruktion für eine Wandöffnung eines Funktionsgebäudes gemäß den Merkmalen der unabhängigen Ansprüche.

Die vorliegende Erfindung bezieht sich auf eine Belüftungskonstruktion für eine Wand eines Gebäudes, insbesondere eines Industrie- oder Agrargebäudes. Besonders bevorzugt werden Belüftungskonstruktionen, die sich über eine gesamte Wandbreite erstrecken, im Stallbereich eingesetzt, um eine gewünschte Belüftung zu erzielen. Eine solche Belüftungskonstruktion kann zum Lüften nahezu vollständig oder zumindest teilweise geöffnet werden, jedoch bei Bedarf - insbesondere bei schlechter Witterung o.ä. - auch wieder geschlossen werden.

Insbesondere in Ställen ist eine intensive Durchlüftung notwendig, um Feuchtigkeit, Gerüche, Schadgase usw. abzuführen. Zudem dient die Belüftung gerade im Sommer auch einer Abfuhr von Wärme, um eine Überhitzung des Stallinneren zu vermeiden.

Es ist bekannt, große Stallwandöffnungen mit Wickeljalousien zu verschließen, die nach oben oder unten aufgerollt werden, um die Stallwandöffnung zu öffnen und dadurch eine Belüftung des Innenraums zu erlauben. Weiterhin sind Lamellensysteme umfassend eine Mehrzahl von horizontal ausgerichteten Lamellen bekannt, wobei die Lamellen jeweils um eine horizontale Achse drehbar sind und eine zumindest teilweise Öffnung der Wand ermöglichen.

Die Offenlegungsschrift DE 101 55 636 A1 beschreibt eine solche Lamellenkonstruktion, bei der vorgesehen ist, dass die Lamellen stufenlos verstellt und in jeder Position gehalten werden können.

Müssen große Gebäudebreiten abgedeckt werden, dann müssen die Lamellen entsprechend breit konstruiert werden. Dabei können sich Probleme der Durchbiegung der Lamellen und/oder der Wellen zum Drehen der Lamellen ergeben, so dass aufwändige Konstruktionen notwendig sind, um die Lamellen entsprechend zu stützen und um die Bewegung der Lamellen von der geschlossenen Position in eine geöffnete Position zu realisieren. Insbesondere müssen derart lange Wellen mehrfach gelagert werden.

Die Aufgabe der Erfindung besteht darin, eine einfach ausgebildete, einfach zu konstruierende und kostengünstige Belüftungskonstruktion bereitzustellen, mit der große, insbesondere breite Wandöffnungen eines Funktionsgebäudes abgedeckt werden können und die insbesondere die Nachteile der bisher bekannten Konstruktionen beseitigen.

Die obige Aufgabe wird durch eine Belüftungskonstruktion für eine Wandöffnung eines Funktionsgebäudes, ein Funktionsgebäude mit einer Belüftungskonstruktion und ein Verfahren zum Installieren und/oder Betreiben einer im Bereich einer Wandöffnung eines Funktionsgebäudes angeordneten Belüftungskonstruktion gelöst, die die Merkmale in den unabhängigen Patentansprüchen 1, 11 und 13 umfassen. Weitere vorteilhafte Ausgestaltungen werden durch die Unteransprüche beschrieben.

Unter Funktionsgebäude ist im nachfolgenden Zusammenhang insbesondere ein Nutz- und/oder Wohngebäude zu verstehen, insbesondere betrifft die Erfindung landwirtschaftlich genutzte Gebäude, insbesondere Ställe, die in Riegelbauweise oder Rahmenbauweise ausgeführt sind. Insbesondere weist das Funktionsgebäude eine Mehrzahl von vertikal angeordneten stützenden Riegelelementen auf. Weiterhin ist vorgesehen, dass mindestens eine Wandseite des Funktionsgebäudes weitgehen offen ist, d.h. zwischen den vertikal stützenden Riegelelementen sind keine Wandverkleidungselemente angeordnet. An dieser offenen Wandseite kann eine nachfolgend beschriebene Belüftungskonstruktion angeordnet werden. Vorzugsweise kann vorgesehen sein, dass mindestens zwei Wandseiten, insbesondere zwei gegenüberliegende Wandseiten des Funktionsgebäudes weitgehend offen ausgebildet sind und mit einer Belüftungskonstruktion versehen, so dass bei zumindest teilweiser Öffnung der Belüftungskonstruktion eine Querlüftung durch das Funktionsgebäude erzielt werden kann. Die Belüftungskonstruktion ist vorzugsweise außenseitig am Gebäude vor der Wandöffnung angeordnet und/oder befestigt.

Die Belüftungskonstruktion für eine Wandöffnung des Funktionsgebäudes umfasst mindestens eine horizontal ausgerichtete Welle und eine Vielzahl an Abdeckelementen, welche drehfest an der mindestens einen horizontal ausgerichteten Welle angeordnet sind. Die Welle ist über mindestens ein Lager an dem Funktionsgebäude befestigt, wobei die Welle in dem Lager drehbar gelagert ist, damit durch Drehung der Welle die an der Welle angeordneten Abdeckelemente von einer geschlossenen Position in mindestens eine geöffnete Lüftungsposition überführt werden können und vice versa.

Die mindestens eine Welle weist zumindest abschnittsweise eine reduzierte Querschnittsfläche auf. Insbesondere ist vorgesehen, dass das mindestens eine Lager zur Befestigung und Halterung der Welle, insbesondere zur unterstützenden mittigen Befestigung und Halterung der Welle am Funktionsgebäude, in einem Teilabschnitt der Welle mit reduzierter Querschnittsfläche angeordnet ist. Insbesondere bei langen Wellen zur Abdeckung großer Wandöffnungsbreiten muss die Welle durch eine Mehrzahl von Lagern gehalten werden, um ein Durchhängen der Welle zu verhindern. Besonders bevorzugt sind alle Lager einer Welle jeweils in Teilabschnitten der Welle mit reduzierter Querschnittsfläche angeordnet.

Gemäß einer bevorzugten Ausführungsform umfasst die mindestens eine Welle mindestens einen ersten Teilabschnitt mit einer ersten Querschnittsfläche und mindestens einen zweiten Teilabschnitt mit einer zweiten Querschnittsfläche. Die zweite Querschnittsfläche ist kleiner als die erste Querschnittsfläche ausgebildet. Die ersten und die zweiten Teilabschnitte sind insbesondere fluchtend angeordnet, so dass die Längsachse der ersten und zweiten Teilabschnitte koaxial zusammenfallen und insbesondere die Längsachse der Welle bilden. Das mindesten eine Lager ist im Bereich eines zweiten Teilabschnittes mit reduzierter zweiter Querschnittsfläche angeordnet.

Gemäß einer bevorzugten Ausführungsform ist weiterhin vorgesehen, dass die zumindest eine horizontal ausgerichtete Welle entlang eines Umfangsverlaufs des ersten Teilabschnitts zumindest abschnittsweise plan ausgebildet ist.

Gemäß einer bevorzugten Ausführungsform umfasst die Belüftungskonstruktion mehrere übereinander angeordnete und jeweils horizontal ausgerichtete Wellen und eine Vielzahl an Abdeckelementen, welche drehfest an den mehreren übereinander angeordneten und jeweils horizontal ausgerichteten Wellen angeordnet sind. Hierbei ist vorgesehen, dass zumindest eine der mehreren übereinander angeordneten und jeweils horizontal ausgerichteten Wellen mindestens abschnittsweise eine reduzierte Querschnittsfläche zur Anordnung mindestens eines Lagers umfasst. Weiterhin kann bevorzugt vorgesehen sein, dass zumindest eine der mehreren übereinander angeordneten und jeweils horizontal ausgerichteten Wellen entlang ihres Umfangsverlaufs zumindest abschnittsweise plan ausgebildet ist. Die nachfolgende Beschreibung ist sowohl für Belüftungskonstruktionen mit nur einer Welle als auch für Belüftungskonstruktionen umfassend mehrere Wellen gültig sowie für ein Funktionsgebäude mit mindestens einer Wandöffnung und einer die Wandöffnung verschließenden Belüftungskonstruktion.

Gemäß einer Ausführungsform können die Abdeckelemente nicht mittig, sondern außermittig nach unten versetzt, an der mindestens einen Welle befestigt werden, damit die obere Kante der Abdeckelemente beim Verdrehen der Welle nicht an die Riegelkonstruktion oder Rahmenkonstruktion bzw. Riegelelemente des Funktionsgebäudes anschlägt. Insbesondere ist dabei vorgesehen, dass ein oberer Bereich jedes Abdeckelementes eine geringere Höhe und/oder eine geringere Querschnittsfläche aufweist als ein unterer Bereich des Abdeckelementes. Bevorzugt werden die Abdeckelemente jeweils im Bereich eines ersten Teilabschnittes an der mindestens einen Welle angeordnet und/oder befestigt.

In einer ersten Arbeitsposition sind die Abdeckelemente vertikal ausgerichtet und bilden eine gemeinsame Abdeckfläche in einer senkrechten Ebene. Hierbei ist insbesondere vorgesehen, dass die untere Kante des jeweils oberen Abdeckelements außenseitig die obere Kante des darunter angeordneten Abdeckelements überdeckt, so dass keine Lücken zwischen den übereinander angeordneten Abdeckelementen vorhanden sind und eine zumindest weitgehend luftundurchlässige Abdeckfläche der Wandöffnung ausgebildet wird. Durch Drehen der mindestens einen Welle werden die an der jeweils gedrehten Welle angeordneten Abdeckelemente in eine geöffnete Stellung überführt, so dass nunmehr Luft in das Funktionsgebäude eintreten kann. Umfasst die Belüftungskonstruktion mehrere Wellen, dann sind vorzugsweise ein Teil der Wellen oder alle Wellen mechanisch miteinander gekoppelt, so dass ein Teil der Abdeckelemente oder alle Abdeckelemente gleichzeitig und synchron von einer geschlossenen Stellung in eine geöffnete Stellung und vice versa überführt werden können. Durch Drehen mindestens einer der Wellen können zumindest ein Teil der Abdeckelemente bei Bedarf zumindest teilweise geöffnet werden, so dass ein Luftaustausch zwischen dem Innenraum des Funktionsgebäudes und der äußeren Umgebung stattfinden kann.

Gemäß einer Ausführungsform ist vorgesehen, dass der mindestens eine erste Teilabschnitt mit zumindest abschnittsweise planem Umfangsverlauf in dem jeweiligen zumindest einen Abschnitt durch ein erstes Profilelement gebildet ist, welches eine Mehrzahl von planen Außenmantelflächen aufweist. Besonders bevorzugt ist vorgesehen, dass die planen Außenmantelflächen parallel zu einer Längsachse der Welle und des ersten Profilelements angeordnet sind. Beispielsweise wird als erstes Profilelement ein Vierkantprofil verwendet, insbesondere ein sogenanntes Vierkantrohr.

Ein solches erstes Profilelement weist gegenüber einer Welle mit einem kreisrunden oder annähern kreisrunden Querschnitt den Vorteil auf, dass es durch die Kanten zwischen den planen Außenmantelflächen stabilisiert wird und somit auch ein erstes Profilelement umfassende lange horizontal angeordnete Wellen nicht zum Durchhängen tendieren. Ebenfalls ist bei einer ein erstes Profilelement umfassenden Welle die Problematik der Torsion, d.h. Verdrehung des Materials oder Bauteils, geringer als bei einer Welle mit einem kreisrunden Querschnitt. Als erstes Profilelement eignen sich beispielsweise auch weitere Profile mit einer Mehrzahl von planen Außenmantelflächen, beispielsweise Profile mit einem mehreckigen Querschnitt, aber auch Doppel- T- Träger oder ähnliches.

Vorzugsweise ist die mindestens eine Welle aus mindestens zwei in einer Flucht angeordneten ersten Profilelementen gebildet, wobei zwischen den mindestens zwei ersten Profilelementen mindestens ein den zweiten Teilabschnitt bildendes zweites Profilelement mit einer reduzierten zweiten Querschnittsfläche fluchtend angeordnet ist. Besonders bevorzugt besteht jede der Wellen aus einer Mehrzahl von in einer Flucht angeordneten ersten Profilelementen, wobei zwischen zwei benachbarten ersten Profilelementen jeweils mindestens ein zweites Profilelement fluchtend angeordnet ist. Weiterhin kann vorgesehen sein, dass der Anfangsbereich und/oder der Endbereich jeder Welle durch ein zweites Profilelement gebildet ist/sind.

Die Profilelemente bestehen vorzugsweise aus Stahl oder einem anderen geeigneten Material, welches beim Drehen der Welle vorzugsweise eine geringe Torsion aufweist.

Vorzugsweise ist die mindestens eine Welle jeweils im Bereich des mindestens einen zweiten Profilelementes gelagert. Während die ersten Profilelemente derart gewählt sind, dass die mindestens eine Welle besonders gute stabilisierende Eigenschaften ausweist, ist das mindestens eine zweite Profilelement derart gewählt, dass eine technisch einfache und kostengünstige Lagerung der mindestens eine Welle im Bereich der zweiten Profilelemente möglich ist. Hierfür gibt es mehrere Möglichkeiten. Besonders bevorzugt kann das zweite Profilelement einen kreisrunden oder weitgehend kreisrunden Querschnitt aufweisen. Als zweites Profilelement kann also beispielsweise ein Rundrohr verwendet werden. Somit können einfach herkömmlich bekannte und käuflich erwerbbare Drehlager ohne weitere Modifikation verwendet werden, beispielsweise Kugellager o.ä.

Das zweite Profilelement kann dabei im Querschnitt in etwa dieselbe xy-Ausdehnung bzw. eine ähnliche Querschnittsfläche aufweisen wie das erste Profilelement. Bevorzugt ist jedoch vorgesehen, dass das zweite Profilelement im Querschnitt eine geringere xy- Ausdehnung und/oder eine geringere Querschnittsfläche aufweist/aufweisen als das erste Profilelement. In andere Worten: bevorzugt kann das erste Profilelement im Querschnitt eine größere xy- Ausdehnung und/oder eine größere Querschnittsfläche aufweisen als das zweite Profilelement. Das zweite Profilelement kann somit beispielsweise auch durch ein Vierkantrohr mit einer geringeren Querschnittsfläche als das erste Profilelement gebildet werden, wobei für die Lagerung der Welle im Bereich des zweiten Profilelementes eine Lagerwelle mit einem kreisrunden Außenumfang und einem dem Vierkantrohr entsprechenden Innenumfang verwendet wird, die auf das zweite Profilelement aufgesteckt ist. Dem Fachmann sind weitere Möglichkeiten der Lagerung von Wellen mit nicht kreisrundem Querschnitt bekannt, die ebenfalls hier ihren Einsatz finden können.

In Abhängigkeit von der gewünschten abzudeckenden Öffnungsbreite ergibt sich eine bestimmte Wellenlänge und eine bestimmte Anzahl an Lagerstellen, die durch entsprechend viele zweite Profilelementbereiche gebildet sind. Die zweiten Profilelemente können insbesondere im Vergleich zur Gesamtlänge der Welle verhältnismäßig kurz ausgebildet sein. Zwischen den zweiten Profilelementen sind entsprechend lange erste Profilelemente angeordnet, die der Welle die gewünschte notwendige Stabilität verleihen.

Die ersten Profilelemente und die zweiten Profilelemente weisen an ihren freien Endbereichen vorzugsweise jeweils einen Flansch auf, so dass die ersten Profilelemente und die zweiten Profilelemente vermittels einer Flanschverbindung einfach und schnell miteinander verbunden werden können.

An der mindestens einen Welle ist jeweils mindestens ein Halteelement für ein Abdeckelement an einem plan ausgebildeten Abschnitt des Umfangsverlaufs angeordnet. Vorzugsweise sind für jedes Abdeckelement mindestens zwei oder mehr Halteelemente an der Welle vorgesehen. Die Befestigung der Halteelemente an einer planen Fläche der Welle ist deutlich einfacher und kostengünstiger zu realisieren als die Befestigung an einer Welle mit gekrümmtem Umfang. Insbesondere ist das mindestens eine Halteelement für ein Abdeckelement an einer planen Außenmantelfläche eines ersten Profilelements angeordnet.

Die Abdeckelemente bestehen vorzugsweise aus einem transparenten oder lichtdurchlässigen Material, so dass auch bei geschlossener Belüftungskonstruktion Licht in den Innenraum des Funktionsgebäudes gelangt. Die Abdeckelemente werden in diesem Zusammenhang auch als Lichtflächen bezeichnet. Somit können die restlichen Wandbereiche beispielsweise ohne Fenster ausgeführt werden. Beispielsweise können transparente oder lichtdurchlässige Hohlkammerplatten aus Polycarbonat, Acryl oder einem anderen geeigneten Material oder transparente oder lichtdurchlässige Wellplatten mit Sinusprofil oder Trapezprofil o.ä. eingesetzt werden. Weiterhin können, insbesondere bei Belüftungskonstruktionen mit mehreren übereinander angeordneten Wellen, unterschiedliche Abdeckelemente verwendet werden, beispielsweise könnten die an der untersten Welle angeordneten Abdeckelemente auch aus einem lichtundurchlässigen Verbundmaterial bestehen, während die Abdeckelemente an den oberen Wellen lichtdurchlässig gewählt werden und somit eine Doppelfunktion: Belüftung und Beleuchtung, erfüllen. Ein aus einem lichtundurchlässigen Verbundmaterial bestehendes Abdeckelement kann beispielsweise anstelle eines Betonsockels verwendet werden.

Gemäß einer Ausführungsform der Erfindung weist zumindest ein Teil der Halteelemente eine Kontur auf, die einer Kontur des Abdeckelements entspricht. Dies ist beispielsweise bei der Verwendung von Wellplatten mit Sinusprofil oder Trapezprofil vorteilhaft. Insbesondere werden mindestens zwei konturierte Halteelemente eingesetzt, um die Abdeckelemente jeweils an den Seitenkanten, die bei geschlossener Belüftungskonstruktion weitgehend senkrecht angeordnet sind, in ihrer Position zu halten und/oder zu fixieren. Die Kontur der Halteelemente erleichtert insbesondere die korrekte Montage der Abdeckelemente an der jeweiligen Welle, da die Kontur der Halteelemente die genaue Anordnung der jeweiligen Abdeckelemente an der Welle vorgibt. Zur weiteren Stabilisierung der Abdeckelemente, insbesondere wenn diese sehr breit ausgestaltet sind und beispielsweise eine Breite von mehreren Metern aufweisen, können weitere Halteelemente an der Welle angeordnet werden, auf denen die Abdeckelemente aufliegen und gegebenenfalls fixiert sind. Diese weiteren Halteelemente können konturiert oder aus Kostengründen unkonturiert ausgeführt sein.

Um mit der Belüftungskonstruktion große Breiten abzudecken, kann es notwendig sein, eine Mehrzahl von Abdeckelementen fluchtend an einer entsprechend lang ausgebildeten Welle anzuordnen. Vorzugsweise ist zwischen zwei fluchtend angeordneten Abdeckelementen ein konturiertes Halteelement angeordnet, dass zwei parallel angeordnete und spiegelbildlich ausgebildete Konturbereiche aufweist, zwischen denen eine Ablaufrinne ausgebildet ist. Eines der Abdeckelemente liegt auf einem ersten Konturbereich auf und das andere Abdeckelement liegt auf dem zweiten Konturbereich auf. Zwischen den Abdeckelementen besteht somit ein geringer Abstand, der aber durch das Halteelement abgedeckt wird. Die Ausbildung des konturierten Halteelements mit einer mittigen Ablaufrinne erlaubt, dass Feuchtigkeit, beispielsweise Regen, über die Ablaufrinne nach unten und vorzugsweise außen abgeleitet wird, und somit bei geschlossener Belüftungskonstruktion nicht zwischen den Abdeckelementen hindurch in das Innere des Funktionsgebäudes eindringen kann.

Die hier beschriebene Belüftungskonstruktion umfasst mindestens einen Antrieb zum drehbeweglichen Antreiben der mindestens einen Welle. Gemäß einer Ausführungsform der Erfindung kann dabei vorgesehen sein, dass bei einer Belüftungskonstruktion mit mehreren übereinander angeordneten Wellen mindestens zwei Wellen mechanisch miteinander gekoppelt sind. Besonders bevorzugt sind alle Wellen einer solchen Belüftungskonstruktion mechanisch miteinander gekoppelt, so dass alle Wellen gemeinsam und synchron über einen einzigen Antrieb angetrieben werden können. Insbesondere sind die Wellen derart gekoppelt, dass beim Drehen der Wellen die jeweils an den Wellen angeordneten Abdeckelemente entsprechend geschwenkt und somit in eine andere Öffnungs- oder Schließposition überführt werden, die bei allen Abdeckelementen gleich ist. Weiterhin kann auch vorgesehen sein, dass ein erster Antrieb für die unterste Welle und gegebenenfalls benachbarte untere Wellen und ein zweiter Antrieb für die oberste Welle und gegebenenfalls benachbarten oberen Wellen vorgesehen ist, so dass die Belüftungskonstruktion selektiv im oberen und unteren Bereich unterschiedlich verstellt werden kann. Dies hat beispielsweise bei Stallgebäuden den Vorteil, dass bei Bedarf über die gesamte Wandfläche gelüftet werden kann, jedoch beispielsweise in Anwesenheit von Jungvieh nur im oberen Bereich gelüftet werden kann, um das Jungvieh vor Zug zu schützen.

Alternativ kann vorgesehen sein, dass jede Welle einer Belüftungskonstruktion mit mehreren übereinander angeordneten Wellen einen eigenen Antrieb aufweist, d.h. die Belüftungskonstruktion umfasst eine erste Anzahl von Wellen und eine zweite Anzahl von Antrieben, wobei die erste Anzahl und die zweite Anzahl einander entsprechen. Bei dieser Ausführungsform können die jeweils an einer Welle angeordneten Abdeckelemente unabhängig von den Abdeckelementen der anderen Wellen in einer gewünschten Position eingestellt werden, so dass sich eine hohe Variabilität an unterschiedlichen Einstellmöglichkeiten ergibt.

Gemäß einer Ausführungsform erfolgt eine mechanische Kopplung einer direkt mit dem Antrieb verbundenen Welle mit mindestens einer weiteren Welle über ein erstes, senkrecht angeordnetes, vertikalbewegliches Rahmenelement und zweiten Rahmenelementen. Die zweiten Rahmenelemente sind jeweils zwischen dem ersten Rahmenelement und einer Welle angeordnet, insbesondere zwischen dem ersten Rahmenelement und im Bereich eines zweiten Profilelements jeder Welle. Die zweiten Rahmenelemente sind jeweils schwenkbeweglich mit dem ersten Rahmenelement und der Welle verbunden. Eine Drehbewegung der direkt angetriebenen Welle wird über das zwischen der angetriebenen Welle und dem ersten Rahmenelement angeordnete zweite Rahmenelement in eine Schwenkbewegung umgesetzt, die dazu führt, dass das erste Rahmenelement eine vertikale Bewegung nach oben oder unten durchführt. Dadurch wird eine Schwenkbewegung eines zwischen dem ersten Rahmenelement und der weiteren anzutreibenden Welle befindlichen zweiten Rahmenelementes ausgelöst, was zu einer Drehung der weiteren anzutreibenden Welle synchron zur direkt angetriebenen Welle führt, so dass die an der direkt angetriebenen Welle angeordneten Abdeckelemente und die an der weiteren anzutreibenden Welle angeordneten Abdeckelemente gleichzeitig und insbesondere synchron verstellt werden.

Besonders bevorzugt wird bei der Belüftungskonstruktion die Kraft des Antriebs direkt in eine Wellenachse eingeleitet, auf der Abdeckelemente aufliegen. D.h. die Antriebskraft wird direkt in eine Drehung der Abdeckelemente umgesetzt.

Die hier beschriebene Belüftungskonstruktion kann verwendet werden, um große Breiten abzudecken, beispielsweise Wandöffnungen, die sich über eine gesamte Länge eines Funktionsgebäudes erstrecken. Insbesondere im Industrie- und Agrarbereich können sich Funktionsgebäude ohne weiteres auf einer Länge von bis zu 100m oder mehr erstrecken. Bei einem solchen Funktionsgebäude in Riegelbauweise oder Rahmenbauweise sind in regelmäßigen definierten mittleren Abständen, beispielsweise im Abstand von 5 bis 6 Metern, vertikale stützende Riegelelemente angeordnet. Die mindestens eine Welle der Belüftungskonstruktion wird entsprechend lang ausgebildet, so dass die Länge der Welle jeweils im Wesentlichen der Breite der abzudeckenden Wandöffnung entspricht. Hierbei ist vorgesehen, dass die mindestens eine Welle im Bereich eines vertikal stützenden Riegelelementes einen kurzen zweiten Profilelementbereich aufweist, während der jeweils dazwischenliegende Wellenabschnitt durch einen entsprechend mehrere Meter langen ersten Profilelementbereich ausgebildet ist. An den vertikalen Riegelelementen sind Lagerhalterungen mit Lagern für die Welle angeordnet, insbesondere derart, dass die Lager jeweils im Bereich eines zweiten Profilelementes der Welle angeordnet sind. Die Wellenabschnitte der ersten Profilelementbereiche der hier beschriebenen Belüftungskonstruktion müssen aufgrund ihrer Stabilität nicht zwischengelagert werden, so dass keine weiteren Konstruktionen zur Anordnung und Befestigung weiterer Lagerhalterungen notwendig sind, wodurch das Gesamtkonstrukt der Belüftungskonstruktion gegenüber herkömmlich bekannten Systemen vereinfacht ist und somit kostengünstiger hergestellt werden kann.

Bei Auswahl eines geeigneten Antriebs und beispielsweise mittiger Anordnung an einer oberen Welle der Belüftungskonstruktion ist es ohne weiteres möglich, eine Belüftungskonstruktion, die sich über 60 Meter erstreckt und die eine Mehrzahl an übereinander angeordneten Wellen mit Abdeckelementen aufweist, anzutreiben. Hierbei ist es möglich, dass der Antrieb die Welle direkt antreibt, es kann aber auch eine Übersetzung, beispielsweise durch ein Schneckengetriebe o.ä., verwendet werden. Dadurch wird die Drehgeschwindigkeit der mindestens einen Welle verlangsamt, wodurch kleinere Winkeldrehungen einstellbar sind, was die Anzahl an Einstellungsmöglichkeiten erhöht. Zudem ergibt sich ein geringerer Anlaufwiderstand.

Die Abdeckelemente können derart an der Welle angeordnet sein, dass sie sich beispielsweise über ein zweites Profilelement hinweg erstrecken und insbesondere die Übergangsbereiche zwischen erstem und zweitem Profilelement überdecken.

Die Erfindung bezieht sich weiterhin auf ein Verfahren zum Installieren und/oder Betreiben einer Belüftungskonstruktion für eine Wandöffnung eines Funktionsgebäudes. Im Bereich der Wandöffnung wird mindestens eine Welle angeordnet und horizontal ausgerichtet, wobei die zumindest eine Welle zumindest abschnittsweise eine reduzierte Querschnittsfläche aufweist und wobei eine Vielzahl an Abdeckelementen drehfest an der mindestens einen horizontal ausgerichteten Welle befestigt werden. Gemäß einer bevorzugten Ausführungsform werden im Bereich der Wandöffnung mehrere Wellen übereinander angeordnet und jeweils horizontal ausgerichtet und eine Vielzahl an Abdeckelementen drehfest an den mehreren übereinander angeordneten und jeweils horizontal ausgerichteten Wellen befestigt. Wie bereits im Zusammenhang mit der Belüftungskonstruktion ausführlich beschrieben, weist zumindest eine Welle zumindest abschnittsweise eine reduzierte Querschnittsfläche auf.

Vorzugsweise umfasst die Welle jeweils spezielle Lagerbereiche, insbesondere mindestens einen speziellen Lagerbereich, in denen / in dem die Welle entsprechend gelagert werden kann. Der mindesten eine Lagerbereich befindet sich in einem Teilabschnitt der Welle mit reduzierter Querschnittsfläche und wird vorzugsweise durch ein zweites Profilelement gebildet, das fluchtend an einem ersten Profilelement angeordnet ist das oder fluchtend zwischen zwei ersten Profilelementen angeordnet ist. Die ersten Profilelemente werden insbesondere aufgrund ihrer Stabilität und geringen Torsionseigenschaften ausgewählt, während die zweiten Profilelemente aufgrund kostengünstiger und/oder technisch einfach realisierbarer Lagermöglichkeiten ausgewählt werden.

Insbesondere wird die mindestens eine Welle derart konstruiert, dass sie eine erste Anzahl von Lagerbereichen aufweisen. Diese erste Anzahl korreliert mit einer zweiten Anzahl an stabilisierenden vertikalen Riegelelementen des Funktionsgebäudes, wobei es sich hierbei um die stabilisierenden vertikalen Riegelelementen handelt, die im Bereich der Wandöffnung des Funktionsgebäudes angeordnet sind oder die Wandöffnung des Funktionsgebäudes seitlich begrenzen. Insbesondere sind die Lagerbereiche in denselben Abständen angeordnet oder ausgebildet, wie die stabilisierenden vertikalen Riegelelemente des Funktionsgebäudes im Bereich der zu verschließenden Wandöffnung. Insbesondere werden die Lagerhalterungen mit den die Welle haltenden Lagern jeweils an den stabilisierenden vertikalen Riegelelementen des Funktionsgebäudes angeordnet. Aufgrund der vorbeschriebenen Ausbildung der mindesten einen Welle, die zu einer erhöhten Stabilität der Welle führt, ist die Lagerung der Welle an der Riegelkonstruktion oder Rahmenkonstruktion des Funktionsgebäudes ausreichend und es sind vorzugsweise keine weiteren Zwischenlager notwendig, um einem Verdrehen der Welle entgegenzuwirken.

Die Montage der Belüftungskonstruktion erfolgt direkt am Funktionsgebäude. Vorzugsweise werden für die Montage der mindestens einen Welle folgende Bauteile vorgefertigt bereitgestellt:
- erste Teilabschnitte, insbesondere in Form von ersten langen Profilelementen, die eine erste Querschnittsfläche und endständige Flanschabschnitte aufweisen;
- zweite Teilabschnitte, insbesondere in Form von zweiten kurzen Profilelementen mit endständigen Flanschabschnitten und einer zweiten Querschnittsfläche, wobei die zweite Querschnittsfläche geringer als die erste Querschnittsfläche ist, und wobei die zweiten kurzen Profilelemente beispielsweise eine kreisförmige Querschnittsfläche und somit einen kreisrunden Umfang aufweisen oder anderweitig ausgebildet sind, so dass sie einfach in herkömmlich verfügbaren Lagern gelagert werden können;
- Lager und
- Lagerhalterungen.

Die Summe aus der Länge eines ersten langen Teilabschnitte und eines zweiten kurzen Teilabschnitts entspricht dabei dem mittleren Abstand zwischen zwei vertikalen Riegelelementen des Funktionsgebäudes.

Ein zweiter Teilabschnitt, insbesondere in Form eines zweiten kurzen Profilelements, wird in einem Lager angeordnet und mittig über eine Lagerhalterung an einem vertikalen Riegelelement des Funktionsgebäudes befestigt. Über einen Flansch des zweiten kurzen Profilelements und einen Flansch eines ersten Teilabschnitts, insbesondere eines ersten langen Profilelements, wird eine Flanschverbindung hergestellt, wobei das erste Profilelement und das zweite Profilelement in einer Flucht hintereinander angeordnet werden. Nunmehr kann über den anderen Flansch des ersten Profilelementes ein weiteres zweites gelagertes Profilelement am ersten Profilelement und vermittels einer weiteren Lagerhalterung am korrespondierend angeordneten vertikalen Riegelelement des Funktionsgebäudes befestigt werden usw. Nachdem die mindestens eine Welle im Bereich der Wandöffnung angeordnet und befestigt sind, werden die Halteelemente für die Abdeckelemente an der mindestens einen Welle befestigt und angeordnet. Alternativ können die Halteelemente auch schon an den zweiten Profilelementen vormontiert geliefert werden. Anschließend werden die Abdeckelemente an den Halteelementen und somit an der mindestens einen Welle angeordnet und befestigt. Bei der Montage der mindestens einen Welle aus den Einzelbauteilen wird auch noch mindestens ein Antrieb an mindestens einer Welle angeordnet und mit dieser verbunden. Bei einer Belüftungskonstruktion umfassend mindestens zwei übereinander angeordneten Wellen mit Abdeckelementen wird weiterhin - sofern notwendig - die mechanische Koppelung von mindestens zwei Wellen mittels oben beschriebener erster und zweiter Rahmenelemente oder einer anderen hierfür geeigneten Konstruktion integriert. Die Verwendung von Flanschverbindungen zwischen den ersten und zweiten Profilelementen ermöglicht eine besonders schnelle und einfache Verbindung dieser miteinander, wobei insbesondere eine Verschraubung von außen erfolgt, so dass keine zusätzliche Torsion auf die Welle aufgebracht wird.

Vorzugsweise werden in diesem Zusammenhang zweite Profilelemente verwendet, deren Querschnittsfläche deutlich geringer ausgebildet ist als die Querschnittsfläche der ersten Profilelemente. Somit können zur Lagerung der aus ersten und zweiten Profilelementen ausgebildeten Welle jeweils Lager verwendet werden, deren Querschnittsfläche vorzugsweise geringer ausgebildet ist als die Querschnittsfläche der ersten Profilelemente oder deren Querschnittsfläche im Wesentlichen der Querschnittsfläche der ersten Profilelemente entspricht. Da die Größe der Lager den Abstand der Welle vom Funktionsgebäude beeinflusst, können derart konstruierte Wellen näher an der Wand des Funktionsgebäudes angeordnet und befestigt werden.

Es sei an dieser Stelle ausdrücklich erwähnt, dass alle Aspekte und Ausführungsvarianten, die im Zusammenhang mit der erfindungsgemäßen Vorrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Vorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Vorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Vorrichtung.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Figur 1A zeigt eine schematische Darstellung einer ersten Ausführungsform einer Welle und deren Lagerung gemäß dem bekannten Stand der Technik.

Figuren 1B und 1C zeigen unterschiedliche Darstellungen einer zweiten Ausführungsform einer Welle und deren Lagerung gemäß dem bekannten Stand der Technik.

Figur 2A zeigt eine seitliche Darstellung einer Belüftungskonstruktion.

Figur 2B zeigt Details einer weiteren Ausführungsform zur Befestigung von Abdeckelementen an einer Belüftungskonstruktion.

Figur 3 zeigt ein Teilstück einer Welle der Belüftungskonstruktion mit Lager.

Figuren 4 bis 6 zeigen jeweils Details eines Teilstücks einer Welle

Figur 7 zeigt eine perspektivische Darstellung eines Teils der Belüftungskonstruktion in einer ersten geschlossenen Arbeitsposition.

Figur 8 zeigt eine perspektivische Darstellung eines Teils der Belüftungskonstruktion in einer zweiten geöffneten Arbeitsposition.

Figur 9 zeigt weitere Details einer perspektivischen Darstellung eines Teils der Belüftungskonstruktion.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

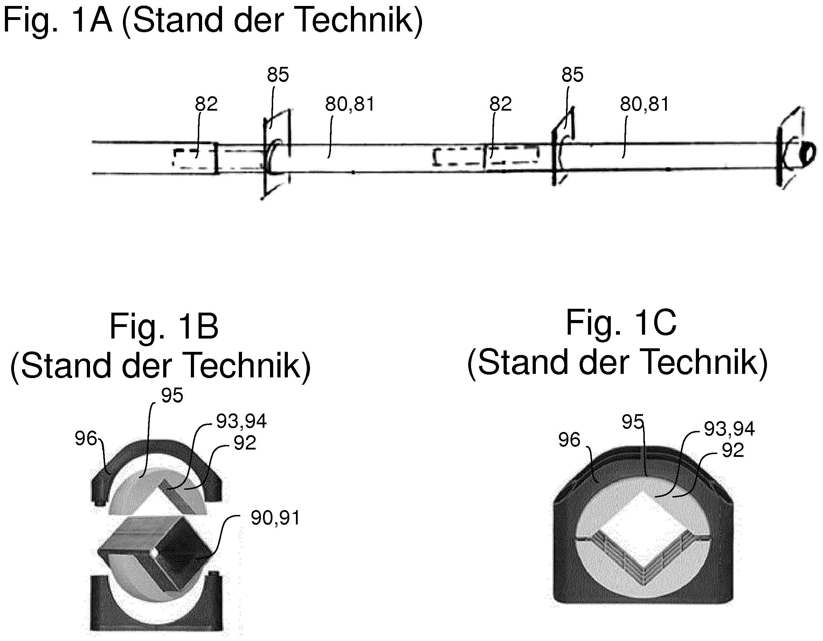

Figur 1A zeigt eine schematische Darstellung einer ersten Ausführungsform einer Welle 80 mit einer kreisförmigen Querschnittsfläche und deren Lagerung gemäß dem bekannten Stand der Technik. Die Welle 80 besteht beispielsweise aus mehreren Rohrabschnitten 81, die fluchtend angeordnet sind und wobei die Summe der Längen der Rohrabschnitte 81 die Gesamtlänge der Welle 80 ausbilden. Die Rohrabschnitte 81 sind beispielsweise durch innenliegende, sich in jeweils benachbarte Rohrabschnitte 81 erstreckende Verbindungsstücke 82 miteinander verbunden. Zusätzlich können die Rohrabschnitte 81 an ihren aneinandergrenzenden Endbereichen miteinander verschweißt sein o.ä.

Die Welle 80 ist über mehrere in regelmäßigen Abständen angeordnete Lager 85 an ihrem kreisförmigen Außenumfang drehbar gelagert. Die Lager 85 weisen insbesondere einen kreisförmigen Innenumfang auf, durch den die Welle 80 geführt ist.

Figuren 1B und 1C zeigen unterschiedliche Darstellungen einer zweiten Ausführungsform einer Welle 90 und deren Lagerung gemäß dem bekannten Stand der Technik. Die Welle 90 wird hierbei durch ein Vierkantprofil 91 mit einer quadratischen Querschnittsfläche gebildet. Um eine solche Welle 90 drehbar zu lagern ist eine ringförmige Ummantelung 92 notwendig. Die ringförmige Ummantelung 92 weist eine mittige Wellenaufnahme 93 auf mit einem quadratischen Innenumfang 94 auf. Weiterhin weist die Ummantelung 92 einen kreisförmigen Außenumfang 95 auf. Die ringförmige Ummantelung 92 sitzt fest auf der Welle 90 auf, so dass bei einer Drehung der Ummantelung 92 die Welle 90 zwingend mitgedreht wird. Zur vereinfachten Befestigung der Ummantelung 92 an der Welle 90 kann diese zweiteilig ausgebildet sein. Im Bereich der Ummantelung 92 ist nunmehr an der Welle 90 ein kreisförmiger Außenumfang ausgebildet, so dass die Welle 90 nunmehr im Bereich der Ummantelung 92 über herkömmlich bekannten Lager 95 analog zur Ausführungsform der Figur 1A gelagert werden kann.

Ein Nachteil der in den Figuren 1B und 1C dargestellten Konstruktion besteht darin, dass für die Lagerung der Welle 90 mit eckiger Querschnittsfläche ein erhöhter Platzbedarf besteht, da durch die notwendige ringförmige Ummantelung 92 der Außenumfang der Welle 90 im Bereich der Lagerung erhöht wird. Dadurch erhöht sich insbesondere der Abstand der Welle 90 von der Wand o.ä., an der die Befestigung erfolgt.

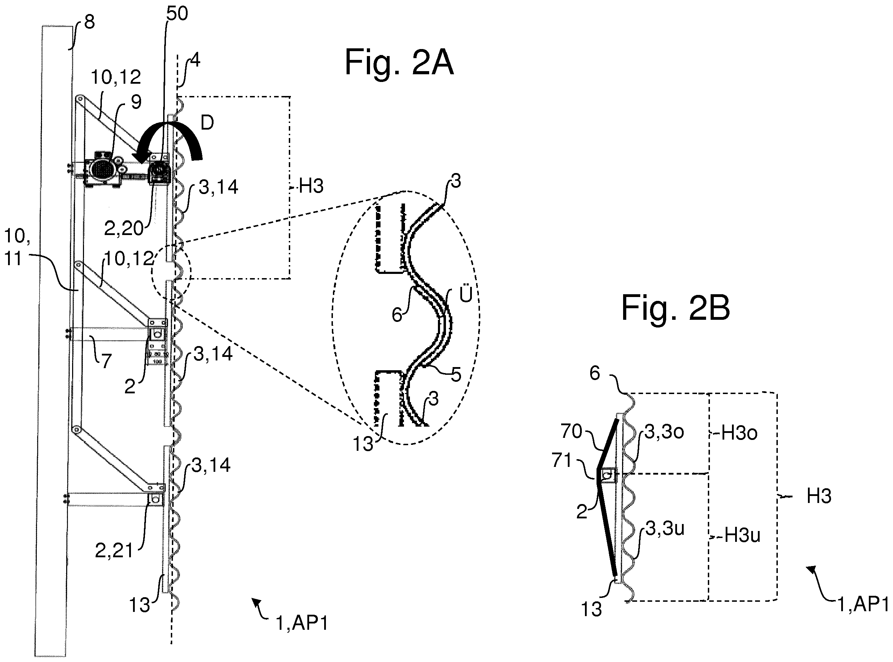

Figur 2A zeigt eine seitliche Darstellung einer Belüftungskonstruktion 1 umfassend mehrere übereinander angeordnete und horizontal ausgerichtete Wellen 2. Die Belüftungskonstruktion 1 dient dazu, breite Wandöffnungen von Funktionsgebäuden derart abzudecken, dass bei Bedarf eine Belüftung des Funktionsgebäudes möglich ist. Insbesondere wird eine nachfolgend näher beschriebene Belüftungskonstruktion 1 im Stallbereich und/oder bei weiteren Funktionsgebäuden in Riegelbauweise oder Rahmenbauweise eingesetzt. Insbesondere weist das Funktionsgebäude eine Mehrzahl von vertikal angeordneten stützenden Riegelelementen 8 auf. Die Belüftungskonstruktion 1 ermöglicht in mindesten einer geöffneten Arbeitsposition eine einfache Belüftung des Funktionsgebäudes. Die Belüftungskonstruktion 1 kann aber bei Bedarf, beispielsweise bei Starkregen o.ä. auch geschlossen werden, um ein Eindringen des Regens in das Funktionsgebäude zu verhindern.

Die Belüftungskonstruktion 1 umfasst mehrere übereinander angeordnete und jeweils horizontal ausgerichtete Wellen 2 und eine Vielzahl an Abdeckelementen 3. Die Abdeckelemente 3 sind an den Wellen 2 angeordnet.

An den Wellen 2 ist jeweils mindestens ein Halteelement 13 für ein Abdeckelement 3 an einem plan ausgebildeten Abschnitt des Umfangsverlaufs der Welle 2 angeordnet. Vorzugsweise sind für jedes Abdeckelement 3 mindestens zwei oder mehr Halteelemente 13 an der Welle 2 vorgesehen. Wie nachfolgend noch näher beschrieben wird, ist zumindest eine der mehreren übereinander angeordneten und jeweils horizontal ausgerichteten Wellen 2 der Belüftungskonstruktion 1 entlang ihres Umfangsverlaufs zumindest abschnittsweise plan ausgebildet. Die Befestigung der Halteelemente 13 an einer planen Fläche der Welle 2 ist deutlich einfacher und kostengünstiger zu realisieren als die Befestigung an einer Welle mit gekrümmtem Umfang.

Figur 2A zeigt die Belüftungskonstruktion 1 umfassend mehrere übereinander angeordnete und horizontal ausgerichtete Wellen 2, bei der in einer ersten Arbeitsposition AP1 die Abdeckelemente 3 vertikal ausgerichtet sind und eine gemeinsame Abdeckfläche 4 in einer senkrechten Ebene bilden. Die Abdeckfläche 4 ist insbesondere als gestrichelte Linie dargestellt. Wie in dem Detailausschnitt deutlich zu erkennen ist, ist die Höhe H3 der Abdeckelemente 3 derart gewählt, dass die untere Kante 5 des jeweils oberen Abdeckelements 3 außenseitig die obere Kante 6 eines an der darunterliegenden Welle 2 angeordneten Abdeckelementes 3 überdeckt, so dass in der geschlossenen ersten Arbeitsposition AP1 keine Lücken zwischen den übereinander angeordneten Abdeckelementen 3 vorhanden sind und eine zumindest weitgehend luftundurchlässige Abdeckfläche 4 gebildet wird. Insbesondere wird durch die Überdeckung Ü verhindert, dass in der geschlossenen ersten Arbeitsposition AP1 Regen zwischen den Abdeckelementen 3 hindurch in das Innere des Funktionsgebäudes eindringen kann.

Für die Lagerung der Wellen 2 sind an geeigneten Lagerhalterungen 7 angeordnete Lager vorgesehen, insbesondere dem Fachmann bekannte Drehlager, beispielsweise Kugellager o.ä. Die Lagerhalterungen 7 sind weiterhin an vertikalen Riegelelementen 8 des Funktionsgebäudes befestigt.

Bei der Belüftungskonstruktion 1 ist ein Antrieb 9 für den Antrieb aller Wellen 2 vorgesehen. Der Antrieb 9 ist insbesondere der obersten Welle 20 der Belüftungskonstruktion 1 zugeordnet und alle darunter angeordneten Wellen 21 der Belüftungskonstruktion 1 sind mechanisch mit dieser obersten Welle 20 gekoppelt, so dass alle Wellen 2 gemeinsam und synchron verstellt werden können. Insbesondere werden beim Drehen der mit dem Antrieb 9 direkt gekoppelten obersten Welle 20 alle anderen Wellen 21 ebenfalls gedreht und dabei werden die jeweils an den Wellen 20, 21 angeordneten Abdeckelemente 3 entsprechend geschwenkt und somit in eine andere Öffnungs- oder Schließposition überführt, die bei allen Abdeckelementen 3 gleich ist.

Besonders bevorzugt wird die Kraft des Antriebs 9 direkt in eine Wellenachse der obersten Welle 20 eingeleitet, auf der Abdeckelemente 3 direkt aufliegen. Somit kann die Antriebskraft direkt in eine Drehung der Abdeckelemente 3 umgesetzt werden. Weiterhin kann vorgesehen sein, dass zwischen dem Antrieb 9 und der obersten Welle 20 ein Schneckengetriebe 50 angeordnet ist, um eine entsprechende Untersetzung herzustellen. Dabei wird die Drehgeschwindigkeit der mindestens einen Welle 2 verlangsamt, wodurch kleinere Winkeldrehungen einstellbar sind, was die Anzahl an Einstellungsmöglichkeiten erhöht. Zudem ergibt sich ein geringerer Anlaufwiderstand.

Die mechanische Kopplung erfolgt über schwenkbar gekoppelte Rahmenelemente 10. Insbesondere ist die direkt mit dem Antrieb 9 verbundene oberste Welle 20 mit mindestens einer weiteren Welle 21 über ein erstes, senkrecht angeordnetes, vertikalbewegliches Rahmenelement 11 und schwenkbeweglich ausgebildeten zweiten Rahmenelementen 12 gekoppelt. Die zweiten Rahmenelemente 12 sind jeweils zwischen dem ersten Rahmenelement 11 und der jeweiligen Welle 2 angeordnet. Eine Drehbewegung der direkt angetriebenen obersten Welle 20 wird über das zwischen der direkt angetriebenen Welle 20 und dem ersten Rahmenelement 11 angeordnete zweiten Rahmenelement 12 in eine Schwenkbewegung umgesetzt, die dazu führt, dass das erste Rahmenelement 11 eine vertikale Bewegung nach oben oder unten durchführt. Dadurch wird eine Schwenkbewegung eines zwischen dem ersten Rahmenelement 11 und der weiteren anzutreibenden Welle 21 befindlichen zweiten Rahmenelementes 12 ausgelöst, was zu einer Drehung der weiteren anzutreibenden Welle 21 synchron zur direkt angetriebenen Welle 20 führt, so dass die an der direkt angetriebenen Welle 20 angeordneten Abdeckelemente 3 und die an der weiteren anzutreibenden Welle 21 angeordneten Abdeckelemente 3 gleichzeitig und insbesondere synchron verstellt werden.

Die Abdeckelemente 3 werden im dargestellten Ausführungsbeispiel durch Wellplatten mit Sinusprofil, beispielsweise Hohlkammerplatten mit Sinusprofil gebildet. Vorzugsweise bestehen diese aus einem transparenten oder lichtdurchlässigen Material, beispielsweise Polycarbonat, Acryl o.ä., so dass auch bei geschlossener Belüftungskonstruktion 1 Licht in den Innenraum des Funktionsgebäudes gelangt. Die Abdeckelemente 3 werden in diesem Zusammenhang deshalb auch als Lichtflächen 14 bezeichnet.

Durch eine Drehung D der Welle 2 in einer ersten Bewegungsrichtung, beispielsweise entgegen dem Uhrzeigersinn, können die Abdeckelemente 3 in eine geöffnete Arbeitsposition überführt werden (nicht dargestellt). Insbesondere werden dabei die oberen Kanten 6 der Abdeckelemente 3 näher an die Riegelelemente 8 des Funktionsgebäudes herangeführt.

Figur 2B zeigt Details einer weiteren Ausführungsform zur Befestigung von Abdeckelementen an einer Belüftungskonstruktion. Um zu verhindern, dass die oberen Kanten 6 der Abdeckelemente 3 an die Riegelkonstruktion oder Rahmenkonstruktion bzw. Riegelelemente 8 des Funktionsgebäudes anschlagen und damit die Belüftungskonstruktion 1 möglichst nah an der Wandöffnung angeordnet werden kann, sind die Abdeckelemente 3 vorzugsweise außermittig nach unten versetzt an den jeweiligen Wellen 2 befestigt, so dass ein oberer Bereiche 3o des Abdeckelements 3 eine Höhe H3o aufweist, die geringer ist als die Höhe H3u eines unteren Bereichs 3u des Abdeckelements. Die Summe der Höhen H3o des oberen Bereichs 3o und H3u des unteren Bereichs 3u ergibt die Gesamthöhe des Abdeckelementes 3.

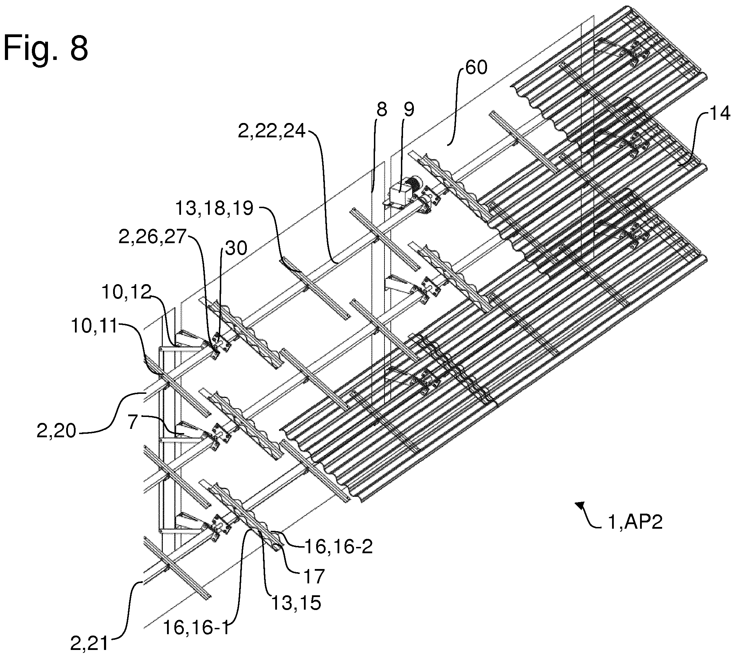

Weiterhin kann vorgesehen sein, dass sich von der Welle 2 ausgehend Versteifungsstreben 70 zum Halteelement 13 hin erstrecken. Dies kann insbesondere in Gebieten mit viel Wind vorteilhaft sein, in denen hohe Windlasten auf die in einer zweiten Arbeitsposition AP2 (vgl. Figur 8) angeordneten Abdeckelemente 3 und somit auf die Halteelemente 13 wirken. Beispielsweise kann vorgesehen sein, ein gekantetes U- Profil 71 zu verwenden, dessen mittlerer Bereich an der Welle 2 anliegt und dessen Seitenbereiche sich zum Halteelement 13 hin erstrecken.

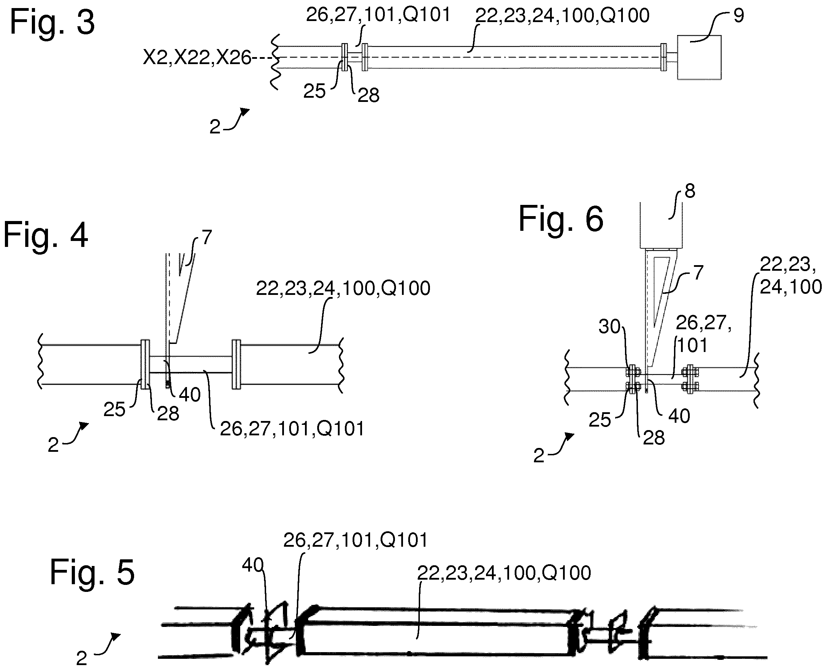

Figuren 3 bis 6 zeigen verschiedene Teilstücke einer Welle 2 der Belüftungskonstruktion 1 gemäß Figur 2A, insbesondere zeigt Figur 3 ein Teilstück einer Welle 2 mit Antrieb und die Figuren 4, 5 und 6 zeigen jeweils Details der Welle 2 mit Lager 40.

Die Welle 2 weist zumindest abschnittsweise eine reduzierte Querschnittsfläche auf und ist insbesondere in einem Teilabschnitt mit reduzierter Querschnittsfläche gelagert. Die Welle 2 umfasst mindestens einen ersten Teilabschnitt 100 mit einer ersten Querschnittsfläche Q100 und einen zweiten Teilabschnitt 101 mit einer zweiten Querschnittsfläche Q101, die gegenüber der ersten Querschnittsfläche 100 eine geringere Größe aufweist. Insbesondere wird die Welle 2 abschnittsweise durch erste Profilelemente 22 gebildet, die jeweils einen ersten Teilabschnitt 100 bilden und vorzugsweise zumindest bereichsweise einen planen Umfangsverlauf aufweisen. Insbesondere ist vorgesehen, dass die ersten Profilelemente 22 eine Mehrzahl von planen Außenmantelflächen 23 aufweisen. Beispielsweise sind die ersten Profilelemente 22 jeweils durch ein Vierkantrohr 24 gebildet. Aufgrund der planen Außenmantelflächen 23 der ersten Profilelemente 22 ist die Welle 2 in sich stabil und tendiert nicht zum Durchhängen. Zudem ist die Problematik der Torsion reduziert. Als erstes Profilelement 22 eignen sich beispielsweise auch weitere Profile mit einer Mehrzahl von planen Außenmantelflächen 23, beispielsweise Profile mit einem mehreckigen Querschnitt, aber auch Doppel- T- Träger oder ähnliches.

Zwischen den durch die ersten Profilelemente 22 gebildeten Abschnitten sind jeweils die zweiten Teilabschnitte 101 bildende zweite Profilelemente 26 fluchtend angeordnet. Insbesondere fallen die Längsachse X22 der ersten Profilelemente 22, die Längsachse X26 der zweiten Profilelemente 26 und die Längsachse X2 der Welle 2 koaxial zusammen.

Die Profilelemente 22, 26 bestehen vorzugsweise aus Stahl oder einem anderen geeigneten Material, welches beim Drehen der Welle 2 vorzugsweise eine geringe Torsion aufweist.

Vorzugsweise sind die Wellen 2 jeweils in einem zweiten Teilabschnitt 101 gelagert, d.h. im Bereich des mindestens einen zweiten Profilelementes 26. Während die ersten Profilelemente 22 derart gewählt sind, dass die Wellen 2 besonders gute Eigenschaften in Bezug auf Stabilität aufweisen, ist das mindestens eine zweite Profilelement 26 derart gewählt, dass eine technisch einfache und kostengünstige Lagerung der Wellen möglich ist. Vorzugsweise kann das zweite Profilelement 26 einen kreisrunden oder weitgehend kreisrunden Querschnitt aufweisen und insbesondere als Rundrohr 27 ausgebildet sein. Als Lager 40 zur Lagerung eines solchen Rundrohrs 27 können einfach herkömmlich bekannte und käuflich erwerbbare Drehlager ohne weitere Modifikation verwendet werden, beispielsweise Kugellager o.ä. Weiterhin kann vorgesehen sein, dass das zweite Profilelement 26 eine geringere Querschnittsfläche aufweist als das erste Profilelement 22.

In Abhängigkeit von der gewünschten Länge der Wellen 2 und der Anzahl an Lagerstellen weisen die Wellen 2 entsprechend viele Bereiche auf, die jeweils durch zweite Profilelemente 26 gebildet werden. Diese, die zweiten Profilelemente 26 umfassenden Bereiche, sind im Vergleich zur Gesamtlänge der Welle 2 verhältnismäßig kurz ausgebildet. Zwischen den zweiten Profilelementen 26 sind entsprechend lange erste Profilelemente 22 angeordnet, die der Welle 2 die gewünschte notwendige Stabilität verleihen. Beispielsweise können Wandöffnungen von Funktionsgebäuden abzudecken sein, die eine Breite von ca. 30m bis hin zu ca. 100m aufweisen. Die vertikal ausgerichteten Riegelelemente 8 des Funktionsgebäudes sind beispielsweise in einem Abstand von 4m bis 5m angeordnet. Dementsprechend weisen die ersten Profilelemente 22 eine Länge auf, die etwas geringer ist als der mittlere Abstand zwischen zwei benachbarten Riegelelementen 8. Die zweiten Profilelemente 26 weisen in etwa eine Länge auf, die im Wesentlichen der Breite eines Riegelelementes 8 entspricht. Insbesondere entspricht die Summe aus einer Länge eines ersten Profilelementes 22 und einer Länge eines zweiten Profilelementes 26 dem mittleren Abstand zwischen zwei benachbarten Riegelelementen 8. Um beispielsweise eine Wandöffnung einer Breite von 30m abzudecken, die seitlich von zwei Riegelelementen 8 begrenzt wird und wobei im Bereich der Wandöffnung fünf weitere Riegelelemente 8 des Funktionsgebäudes angeordnet sind, die jeweils einen mittleren Abstand von 5m zueinander aufweisen, werden beispielsweise Wellen 2 jeweils umfassend sechs erste Profilelemente 22 und sieben zweite Profilelemente 26 verwendet, wobei die Summe aus der Länge eines ersten Profilelementes 22 und der Länge eines zweiten Profilelementes 26 ebenfalls 5m entspricht. Der Antrieb 9 kann dabei endständig an der Welle 2 angeordnet sein. Alternativ kann vorgesehen sein, dass der Antrieb 9 dem mittleren zweiten Profilelement 26 zugeordnet ist. Um eine Öffnung mit einer Breite von 100m abzudecken, kann es sinnvoll seine, zwei oder mehr entsprechend breite Belüftungskonstruktionen nebeneinander anzuordnen, insbesondere wenn mit einem einzigen Antrieb nicht die notwendige Kraft aufgebracht werden kann, um eine Welle von 100m Länge zu drehen. Beispielsweise kann es bei einer abzudeckenden Wandöffnungsbreite von 100m vorgesehen sein, dass zwei 50m lange Belüftungskonstruktionen eingesetzt werden, wobei Antriebe der Belüftungskonstruktionen jeweils mittig angeordnet sind, so dass sich die Wellen jeweils 25m beidseitig zu den Antrieben erstrecken. Die mittige Anordnung des Antriebs reduziert ebenfalls eine etwaige Verdrillung der Wellen 2.

Die ersten Profilelemente 22 und die zweiten Profilelemente 26 weisen an ihren freien Endbereichen vorzugsweise jeweils einen endständigen Flansch 25, 28 auf, so dass die ersten Profilelemente 22 und die zweiten Profilelemente 26 vermittels einer Flanschverbindung 30 durch Verschrauben der Flansche 25, 28 einfach und schnell miteinander verbunden werden können (vergleiche insbesondere Figur 6). Dadurch können auf einfache Weise Wellen 2 in benötigter Länge hergestellt werden. Die hier beschriebene Belüftungskonstruktion 1 kann somit flexibel eingesetzt werden, um insbesondere unterschiedliche Breiten von Wandöffnungen abzudecken.

Die derartig konstruierten Wellen 2 müssen aufgrund ihrer inneren Stabilität nicht zwischengelagert werden. Insbesondere ist die Lagerung der Wellen 2 korrespondierend zur Riegelkonstruktion oder Rahmenkonstruktion des Funktionsgebäudes ausreichend und es sind keine zusätzlichen Riegelelemente zur Anordnung und Befestigung weiterer Lagerhalterungen notwendig. Dies vereinfacht die Konstruktion der Belüftungskonstruktion 1 gegenüber herkömmlich bekannten Systemen. Da die Belüftungskonstruktion 1 weniger Bauteile benötigt, kann diese kostengünstiger als bisher auf dem Markt verfügbare Systeme hergestellt werden.

Ein besonderer Vorteil besteht darin, dass zur Lagerung der Wellen 2 im Bereich der zweiten Teilabschnitte 101 bzw. im Bereich der zweiten Profilelemente 26 jeweils Lager 40 verwendet werden können, die den Außenumfang der Wellen 2 im Bereich der Lagerung nicht vergrößern. Das zweite Profilelement 26 kann einen Querschnitt in beliebiger geeigneter Form aufweisen. Insbesondere benötigen zweite Profilelemente 26 mit einem kreisförmigen Querschnitt für die Lagerung keine zusätzliche Ummantelung wie im Stand der Technik gemäß Figuren 1B und 1C dargestellt, sondern es können herkömmliche Lager 40 für Rohre analog zu Figur 1A verwendet werden. Dadurch kann die mindestens eine Welle 2 nah an der Wand des Funktionsgebäudes angeordnet werden. Vorzugsweise wird ein zweites Profilelement 26 mit einem derart geringen kreisförmigen Querschnitt gewählt, dass die Querschnittsfläche des entsprechend zu verwendenden Lagers 40 im Wesentlichen der Querschnittsfläche Q101 des zweiten Profilelementes 24 entspricht oder sogar geringer ausgebildet ist (vergleiche insbesondere Figur 5).

Die Ausbildung der ersten Profilelemente 24 mit einem eckigen Querschnitt erlaubt weiterhin eine einfache Montage der Halteelemente 13 und/oder Abdeckelemente 3 an den Welle 2, da diese auf planen Flächen der Welle 2 aufliegen können und keine Befestigung an einer gewölbten Oberfläche der Welle 2 notwendig ist.

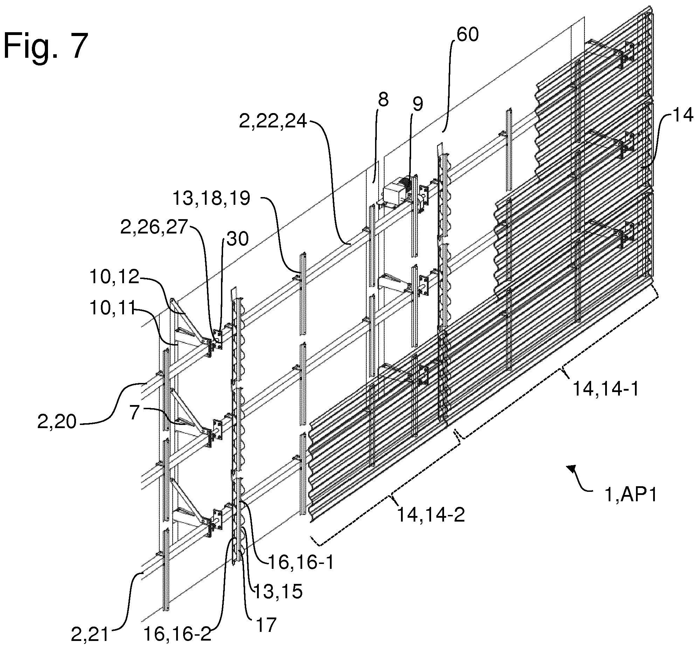

Figur 7 zeigt eine perspektivische Darstellung eines Teils der Belüftungskonstruktion 1 in einer ersten geschlossenen Arbeitsposition AP1 und Figur 8 zeigt eine perspektivische Darstellung in einer zweiten geöffneten Arbeitsposition AP2. Hierbei wurden teilweise die Abdeckelemente 14 weggelassen, um die Anordnung und Ausbildung der Wellen 2 und der Halteelemente 13 besser zu verdeutlichen. In den Figuren 6 und 7 ist deutlich die Ausbildung der Wellen 2 aus fluchtend angeordneten ersten langen Profilelementen 22 in Form von Vierkantrohren 24 erkennbar. Zwischen zwei fluchtenden ersten langen Profilelementen 22 ist über Flanschverbindungen 30 jeweils ein kurzes zweites Profilelement 26 mit einem kreisförmigen Querschnitt angeordnet. Die Wellen 2 sind jeweils im Bereich des kurzen zweiten Profilelementes 26 gelagert. Die Lagerhalter 7 sind an Riegelelementen 8 des Funktionsgebäudes angeordnet und fixiert, um die Belüftungskonstruktion 1 im Bereich der Wandöffnung 60 am Funktionsgebäude zu befestigen.

Gemäß der in Figur 7 dargestellten Belüftungskonstruktion 1 sind alle Abdeckelemente 14 vertikal ausgerichtet, d.h. die Belüftungskonstruktion 1 befindet sich in einer ersten geschlossenen Arbeitsposition AP1. Dagegen befinden sich die Abdeckelemente 14 gemäß Figur 8 in einer zweiten geöffneten Arbeitsposition AP2. Dies wird dadurch erreicht, dass durch eine synchrone Drehung der Wellen 2 die an diesen angeordneten Halteelemente 13 und dadurch wiederum die Abdeckelemente 14 in eine winklig gegenüber einer Vertikalebene angeordnet Position überführt werden. Insbesondere wird die Drehung der Wellen 2 durch einen Antrieb 9 bewirkt, der der obersten Welle 20 zugeordnet ist. Über die Rahmenelemente 10, 11, 12, die bereits im Zusammenhang mit Figur 2A ausführlich beschrieben worden sind und die die Wellen 2 mechanisch miteinander koppeln, überträgt sich die Drehung der obersten Welle 20 auf alle weiteren Wellen 2 der Belüftungskonstruktion 1.

Um mit der Belüftungskonstruktion 1 große Breiten abzudecken, kann es notwendig sein, eine Mehrzahl von Abdeckelementen 14-1, 14-2 fluchtend an einer entsprechend lang ausgebildeten Welle 2 anzuordnen. Vorzugsweise ist zwischen zwei fluchtend angeordneten Abdeckelementen 14-1, 14-2 ein konturiertes Halteelement 15 angeordnet, dass zwei parallel angeordnete und spiegelbildlich ausgebildete Konturbereiche 16 aufweist, die insbesondere als Auflage für die Abdeckelemente 14-1, 14-2 dienen und insbesondere eine Kontur der Abdeckelemente 14-1, 14-2 spiegeln (vergleiche auch Figur 2A). Insbesondere ist vorgesehen, dass eines der Abdeckelemente 14-1 im Bereich seiner Seitenkante auf einem ersten Konturbereich 16-1 eines konturierten Halteelementes 15 aufliegt und das fluchtend anschließende Abdeckelement 14-2 im Bereich seiner Seitenkante auf einem zweiten Konturbereich 16-2 desselben konturierten Halteelementes 15 aufliegt. Insbesondere ist dabei vorgesehen, dass zwischen den Seitenkanten der Abdeckelemente 14-1, 14-2 ein zumindest geringfügiger Abstand besteht. Zwischen dem ersten Konturbereich 16-1 und dem zweiten Konturbereich 16-2 ist eine Ablaufrinne 17 ausgebildet, über die Feuchtigkeit, beispielsweise Regen, nach unten und außen abgeleitet werden kann.

Die Konturbereiche 16 der konturierten Halteelemente 15 erleichtern insbesondere die korrekte Montage der Abdeckelemente 14 an der jeweiligen Welle 2, da die Konturbereiche 16 die genaue Anordnung der jeweiligen Abdeckelemente 14 an der Welle 2 vorgeben. Vorzugsweise werden die Abdeckelemente 14 derart an der Welle 2 angeordnet, dass sie sich beispielsweise über ein zweites Profilelement 26 hinweg erstrecken und insbesondere die Übergangsbereiche zwischen zwei ersten Profilelementen 22 überdecken.

Weiterhin sind zur weiteren Stabilisierung der Abdeckelemente 14 in einem mittleren Bereich weitere Halteelemente in Form von Auflageelementen 18 vorgesehen. Diese können deutlich einfacher als die konturierten Halteelemente 15 ausgebildet sein und beispielsweise nur eine plane Auflagefläche 19 für die Abdeckelemente 14 bereitstellen, auf der die Abdeckelemente 14 teilweise aufliegen und gegebenenfalls zusätzlich fixiert sind.

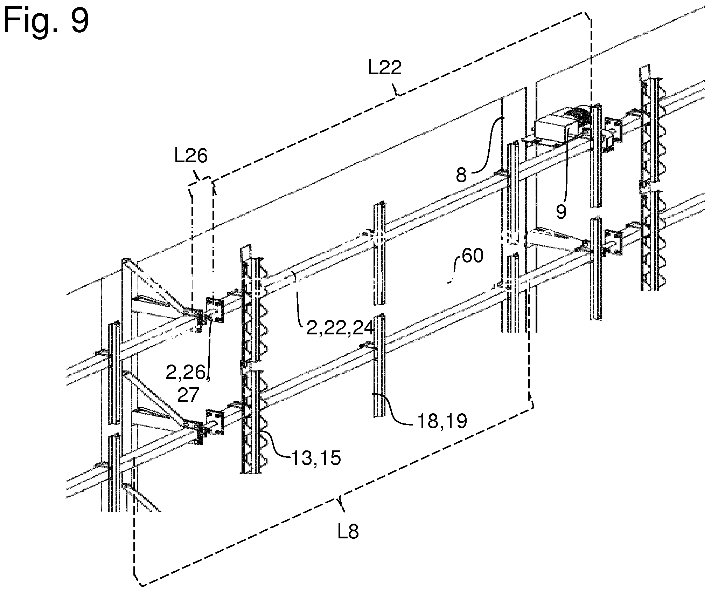

Figur 9 zeigt weitere Details einer perspektivischen Darstellung eines Teils der Belüftungskonstruktion, insbesondere werden in Figur 9 die Längen der einzelnen Wellenabschnitte näherdargestellt und definiert. In Abhängigkeit von einer gewünschten Gesamtlänge der Wellen 2 und der Anzahl an Lagerstellen weisen die Wellen 2 entsprechend viele Bereiche auf, die jeweils durch zweite Profilelemente 26 einer Länge L26 gebildet werden. Zwischen den zweiten Profilelementen 26 sind erste Profilelemente 22 mit einer jeweiligen Länge L22 angeordnet. Insbesondere gilt, dass die Summe aus der Länge L22 eines ersten Profilelementes 22 und der Länge L26 eines zweiten Profilelementes 26 dem mittlere Abstand L8 zwischen zwei benachbarten Riegelelementen 8 entspricht.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

Wenn auch im Zusammenhang der Figuren generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen der Belüftungskonstruktion und/oder Teilen der Vorrichtung oder anderer gezeichneter Elemente in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise der erfindungsgemäßen Vorrichtung ein besseres Verständnis für den in den Ansprüchen sowie im allgemeinen Teil der Beschreibung allgemeiner und/oder abstrakter formulierten Erfindungsgedanken abzuleiten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichen

- 1: Belüftungskonstruktion
- 2: Welle
- 3: Abdeckelement
- 3o: oberer Bereich des Abdeckelements
- 3u: unterer Bereich des Abdeckelements
- 4: Abdeckfläche
- 5: untere Kante
- 6: obere Kante
- 7: Lagerhalterung
- 8: Riegelelement
- 9: Antrieb
- 10: Rahmenelement
- 11: erstes, senkrecht angeordnetes, vertikalbewegliches Rahmenelement
- 12: zweites Rahmenelement
- 13: Halteelement
- 14, 14-1, 14-2: Lichtfläche
- 15: konturiertes Halteelement
- 16, 16-1, 16-2: Konturbereich
- 17: Ablaufrinne
- 18: Auflageelement
- 19: Auflagefläche
- 20: oberste Welle
- 21: untere Welle
- 22: erstes Profilelement
- 23: plane Außenmantelfläche
- 24: Vierkantrohr
- 25: endständiger Flansch am ersten Profilelement
- 26: zweites Profilelement
- 27: Rundrohr
- 28: endständiger Flansch am zweiten Profilelement
- 30: Flanschverbindung
- 40: Lager
- 50: Schneckengetriebe
- 60: Wandöffnung
- 70: Versteifungsstrebe
- 71: gekantetes U-Profil
- 80: Welle mit kreisförmigem Querschnitt
- 81: Rohrabschnitt
- 82: Verbindungsstück
- 85: Lager
- 90: Welle mit quadratischem Querschnitt
- 91: Vierkantprofil
- 92: ringförmige Ummantelung
- 93: mittige Wellenaufnahme
- 94: quadratischer Innenumfang
- 95: kreisförmiger Außenumfang
- 96: Lager
- 100: erster Teilabschnitt
- 101: zweiter Teilabschnitt
- AP1: erste geschlossene Arbeitsposition
- AP2: zweite geöffnete Arbeitsposition
- D: Drehung
- H3: Höhe Abdeckelement
- H3o: Höhe des oberen Bereichs des Abdeckelements
- H3u: Höhe des unteren Bereichs des Abdeckelements
- L8: mittlerer Abstand zwischen zwei benachbarten Riegelelementen
- L22: Länge erstes Profilelement
- L26: Länge zweites Profilelement
- Q100: erste Querschnittsfläche
- Q101: zweites Querschnittsfläche
- Ü: Überdeckung
- X2: Längsachse Welle
- X22: Längsachse erstes Profilelement
- X26: Längsachse zweites Profilelement

## Patentansprüche

1. Belüftungskonstruktion (1) für eine Wandöffnung eines Funktionsgebäudes, umfassend
- mindestens eine horizontal ausgerichtete Welle (2),
- eine Vielzahl an Abdeckelementen (3), welche drehfest an der mindestens einen horizontal ausgerichteten Welle (2) angeordnet sind,
- mindestens ein Lager (40) zur drehbaren Befestigung der mindestens einen Welle (2) am Funktionsgebäude;
**dadurch gekennzeichnet,**
- **dass** die mindestens eine Welle (2) zumindest abschnittsweise eine reduzierte Querschnittsfläche aufweist und
- **dass** das mindestens eine Lager (40) in dem Teilabschnitt der Welle (2) mit reduzierter Querschnittsfläche angeordnet ist.

2. Belüftungskonstruktion (1) nach Anspruch 1, wobei
- die mindestens eine Welle (2) mindestens einen ersten Teilabschnitt (100) mit einer erste Querschnittsfläche (Q100) umfasst,
- wobei die Welle (2) mindestens einen zweiten Teilabschnitt (101) mit einer zweiten Querschnittsfläche (Q101) umfasst,
- wobei die zweite Querschnittsfläche (Q101) kleiner ist als die erste Querschnittsfläche (Q100),
- wobei das mindestens eine Lager (40) im Bereich eines zweites Teilabschnittes (101) an der Welle (2) angeordnet ist.

3. Belüftungskonstruktion (1) nach Anspruch 1 oder 2, wobei die zumindest eine horizontal ausgerichtete Welle (2) entlang eines Umfangsverlaufs des ersten Teilabschnitts (100) zumindest abschnittsweise plan ausgebildet ist.

4. Belüftungskonstruktion (1) nach einem der voranstehenden Ansprüche, wobei die Belüftungskonstruktion (1) mehrere übereinander angeordnete und jeweils horizontal ausgerichtete Wellen (2) umfasst, die jeweils mit Abdeckelementen (3) ausgestattet sind und/oder wobei die Abdeckelemente (3) außermittig an der mindestens einen Welle (2) befestigt sind, insbesondere wobei ein oberer Bereich (3o) jedes Abdeckelementes (3) eine geringere Höhe (H3o) und/oder eine geringere Querschnittsfläche aufweist als ein unterer Bereich (3u) jedes Abdeckelementes (3) und/oder wobei die Abdeckelemente (3) jeweils im Bereich eines ersten Teilabschnittes (100) der mindestens einen Welle (2) befestigt sind.

5. Belüftungskonstruktion (1) nach einem der voranstehenden Ansprüche, wobei der mindestens eine erste Teilabschnitt (100) mit zumindest abschnittsweise planem Umfangsverlauf durch ein erstes Profilelement (22) gebildet ist, wobei das erste Profilelement (22) eine Mehrzahl von planen Außenmantelflächen aufweist, insbesondere wobei das erste Profilelement (22) ein Vierkantprofil (24) ist.

6. Belüftungskonstruktion (1) nach Anspruch 5, wobei die mindestens eine Welle (2) aus mindestens zwei in einer Flucht angeordneten ersten Profilelementen (22) gebildet ist, zwischen denen mindestens ein den zweiten Teilabschnitt (101) bildendes zweites Profilelement (26) fluchtend angeordnet ist, insbesondere wobei die mindestens eine Welle (2) aus einer Mehrzahl von in einer Flucht angeordneten ersten Profilelementen (22) gebildet ist, wobei zwischen zwei benachbarten ersten Profilelementen (22) jeweils mindestens ein zweites Profilelement (26) fluchtend angeordnet ist und, wobei die mindestens eine Welle (2) im Bereich des mindestens einen zweiten Profilelementes (26) gelagert ist.

7. Belüftungskonstruktion (1) nach einem der voranstehenden Ansprüche, wobei mindestens ein Halteelement (13) für ein Abdeckelement (3) an einem plan ausgebildeten Abschnitt des Umfangsverlaufs angeordnet ist, insbesondere wobei mindestens ein Halteelement (13) für ein Abdeckelement (3) an einer planen Außenmantelfläche (23) eines ersten Profilelements (22) angeordnet ist.

8. Belüftungskonstruktion (1) nach Anspruch 7, wobei das Halteelement (13) mindestens eine Kontur aufweist, die einer Kontur des Abdeckelements (3) entspricht und/oder wobei das Halteelement (13) zur Ableitung von Regen und/oder Feuchtigkeit zwischen zwei fluchtend angeordneten Abdeckelementen (3) ausgebildet ist.

9. Belüftungskonstruktion (1) nach einem der voranstehenden Ansprüche, wobei die Belüftungskonstruktion (1) mindestens einen Antrieb (9) zum drehbeweglichen Antreiben der mindestens einen Welle (2) umfasst.

10. Belüftungskonstruktion (1) nach Anspruch 9, wobei die Belüftungskonstruktion mindestens zwei übereinander angeordnete und jeweils horizontal ausgerichtete Wellen (2) mit Abdeckelementen (3) umfasst, wobei eine mechanische Kopplung einer direkt mit dem Antrieb (9) verbundenen Welle (2) mit mindestens einer weiteren Welle (2) über ein erstes, senkrecht angeordnetes, vertikalbewegliches Rahmenelement (11) und zweite Rahmenelemente (12) erfolgt, wobei die zweiten Rahmenelemente (12) jeweils zwischen dem ersten Rahmenelement (11) und einem Profilelement, insbesondere dem zweiten Profilelement (26) jeder Welle (2), angeordnet und mit diesen schwenkbar verbunden sind.

11. Funktionsgebäude mit mindestens einer Wandöffnung und einer die Wandöffnung verschließenden Belüftungskonstruktion (1), die Belüftungskonstruktion (1) umfassend
- mindestens eine horizontal ausgerichtete Welle (2), insbesondere mehrere übereinander angeordnete und jeweils horizontal ausgerichtete Wellen (2),
- eine Vielzahl an Abdeckelementen (3), welche drehfest an der mindestens einen horizontal ausgerichteten Welle (2) angeordnet sind,
- mindestens ein Lager (40) zur drehbaren Befestigung der mindestens einen Welle (2) am Funktionsgebäude;
**dadurch gekennzeichnet,**
- **dass** die mindestens eine Welle (2) zumindest abschnittsweise eine reduzierte Querschnittsfläche aufweist, und
- **dass** das mindestens eine Lager (40) in einem Teilabschnitt der Welle (2) mit reduzierter Querschnittsfläche angeordnet ist.

12. Funktionsgebäude nach Anspruch 11, wobei das Funktionsgebäude in Riegelbauweise oder Rahmenbauweise ausgeführt ist und eine Mehrzahl von vertikal angeordneten stützenden Riegelelementen (8) umfasst, das Funktionsgebäude weiterhin umfassend eine Belüftungskonstruktion (1) nach einem der Ansprüche 2 bis 10, wobei die mittleren Abstände zwischen den zweiten Teilabschnitten (101) der mindestens einen Welle (2) den mittleren Abständen der vertikalen Riegelelemente (8) entsprechen und wobei mindestens zwei Halterungen (7) für die Lagerung einer Welle (2) vorgesehen sind, die im Bereich von mindestens zwei zweiten Teilabschnitte (101) an mindestens zwei vertikalen Riegelelementen (8) des Funktionsgebäudes angeordnet sind.

13. Verfahren zum Installieren und/oder Betreiben einer Belüftungskonstruktion (1) für eine Wandöffnung eines Funktionsgebäudes, wobei
- im Bereich der Wandöffnung mindestens eine Welle (2) angeordnet und horizontal ausgerichtet wird, wobei die zumindest eine Welle (2) zumindest abschnittsweise eine reduzierte Querschnittsfläche aufweist, insbesondere wobei im Bereich der Wandöffnung mehrere Wellen (2) übereinander angeordnet und jeweils horizontal ausgerichtet werden, wobei zumindest eine Welle (2) entlang ihres Umfangsverlaufs zumindest abschnittsweise eine reduzierte Querschnittsfläche aufweist, wobei
- eine Vielzahl an Abdeckelementen (3) drehfest an der mindestens einen horizontal ausgerichteten Welle (2) befestigt werden und
- wobei mindestens eine Welle (2) in einem Teilabschnitt mit reduzierter Querschnittsfläche gelagert wird.

14. Verfahren nach Anspruch 13, wobei die mindestens eine Welle (2) derart konstruiert wird, dass sie eine erste Anzahl von Lagerbereichen mit reduzierter Querschnittsfläche aufweist, die mit einer zweiten Anzahl an stabilisierenden vertikalen Riegelelementen (8) des Funktionsgebäudes korrelieren, wobei die stabilisierenden vertikalen Riegelelemente (8) im Bereich der Wandöffnung des Funktionsgebäudes angeordnet sind oder die Wandöffnung des Funktionsgebäudes seitlich begrenzen.

15. Verfahren nach Anspruch 13 oder 14, wobei die mindestens eine Welle (2) vor Ort am Funktionsgebäude montiert wird, insbesondere wobei die mindestens eine Welle (2) vor Ort aus ersten Teilabschnitten (100) mit einer ersten Querschnittsfläche (Q100) und zweiten Teilabschnitten (101) mit einer zweiten Querschnittsfläche (Q101) und mit endständigen Flanschen (25, 28) zusammengesetzt wird, wobei die zweite Querschnittsfläche (Q101) geringer als die erste Querschnittsfläche (Q100) ist, und wobei die mindesten eine Welle (2) im Bereich der zweiten Teilabschnitte (101) gelagert wird, insbesondere wobei die zweiten Teilabschnitte (101) als vorgefertigtes Konstruktionsteil mit einem Lager (40) und Halterung (7) vorgefertigt bereitgestellt werden.

## Claims

1. A ventilation construction (1) for a wall opening of a functional building, comprising
- at least one horizontally aligned shaft (2),
- a plurality of cover elements (3), which are arranged in a non-rotatable manner on the at least one horizontally aligned shaft (2),
- at least one bearing (40) for the rotatable attachment of the at least one shaft (2) to the functional building;
**characterised in**
- **that** the at least one shaft (2) has a reduced cross-sectional area at least in sections, and
- **that** the at least one bearing (40) is arranged within the partial section of the shaft (2) which has the reduced cross-sectional area.

2. The ventilation construction (1) as recited in claim 1, wherein
- the at least one shaft (2) comprises at least one first partial section (100) with a first cross-sectional area (Q100),
- wherein the shaft (2) comprises at least one second partial section (101) with a second cross-sectional area (Q101),
- wherein the second cross-sectional area (Q101) is smaller than the first cross-sectional area (Q100),
- wherein the at least one bearing (40) is arranged on the shaft (2) in the region of a second partial section (101).

3. The ventilation construction (1) as recited in claim 1 or 2, wherein the at least one horizontally aligned shaft (2) is formed to be planar at least in sections along a circumferential contour of the first partial section (100).

4. The ventilation construction (1) as recited in one of the previous claims, wherein the ventilation construction (1) comprises several shafts (2) arranged one above the other and each shaft (2) being horizontally aligned, each of which shaft (2) is equipped with covering elements (3) and/or wherein the covering elements (3) are eccentrically fixed to the at least one shaft (2), in particular wherein an upper region (3o) of each covering element (3) has a lower height (H3o) and/or a smaller cross-sectional area than a lower region (3u) of each covering element (3) and/or wherein the covering elements (3) are each fixed in the region of a first partial section (100) of the at least one shaft (2).

5. The ventilation construction (1) as recited in one of the previous claims, wherein the at least one first partial section (100) with an at least sectionally planar circumferential contour is formed by a first profile element (22), wherein the first profile element (22) has a plurality of outer circumferential surfaces with a planar design, in particular wherein the first profile element (22) is a four-edged profile (24).

6. The ventilation construction (1) as recited in claim 5, wherein the at least one shaft (2) is formed from at least two first profile elements (22) arranged in alignment, between which at least two first profile elements (22) at least one second profile element (26) forming the second partial section (101) is arranged in alignment, in particular wherein the at least one shaft (2) is formed from a plurality of first profile elements (22) arranged in alignment, wherein in each case at least one second profile element (26) is arranged in alignment between two adjacent first profile elements (22) and wherein the at least one shaft (2) is mounted in the region of the at least one second profile element (26).

7. The ventilation construction (1) as recited in one of the previous claims, wherein at least one holding element (13) for a covering element (3) is arranged on a planar section of the circumferential contour, in particular wherein at least one holding element (13) for a covering element (3) is arranged on a planar outer surface (23) of a first profile element (22).

8. The ventilation construction (1) as recited in claim 7, wherein the holding element (13) has at least one contour which corresponds to a contour of the covering element (3) and/or wherein the holding element (13) is designed to drain off rain and/or moisture between two covering elements (3), which are arranged in alignment.

9. The ventilation construction (1) as recited in one of the previous claims, wherein the ventilation construction (1) comprises at least one drive (9) for rotatably driving the at least one shaft (2).

10. The ventilation construction (1) as recited in claim 9, wherein the ventilation construction comprises at least two shafts (2) with cover elements (3), which at least two shafts (2) are arranged one above the other and are each horizontally aligned, wherein a mechanical coupling of a shaft (2) connected directly to the drive (9) with at least one further shaft (2) takes place via a first vertically arranged and vertically movable frame element (11) and second frame elements (12), wherein the second frame elements (12) are each arranged between the first frame element (11) and a profile element, in particular the second profile element (26) of each shaft (2), and wherein the second frame elements (12) are pivotably connected thereto.

11. A functional building with at least one wall opening and a ventilation construction (1) closing off the wall opening, the ventilation construction (1) comprising
- at least one horizontally aligned shaft (2), in particular several shafts (2) arranged one above the other and aligned horizontally in each case,
- a plurality of cover elements (3), which are arranged in a non-rotatable manner on the at least one horizontally aligned shaft (2),
- at least one bearing (40) for the rotatable attachment of the at least one shaft (2) to the functional building;
**characterised in that**
- the at least one shaft (2) has a reduced cross-sectional area at least in sections, and
- that the at least one bearing (40) is arranged within a partial section of the shaft (2) which has the reduced cross-sectional area.

12. The functional building as recited in claim 11, wherein the functional building is constructed as a framework construction or a frame construction and comprises a plurality of vertically arranged supporting frame elements (8), the functional building further comprising a ventilation construction (1) according to one of the claims 2 to 10, wherein the average distances between the second partial sections (101) of the at least one shaft (2) correspond to the average distances of the vertical frame elements (8) and wherein at least two mountings (7) are provided for the bearing of a shaft (2), which mountings (7) are arranged in the region of at least two second partial sections (101) on at least two vertical frame elements (8) of the functional building.

13. A method for installing and/or operating a ventilation construction (1) for a wall opening of a functional building, wherein
- at least one shaft (2) is arranged and horizontally aligned in the region of the wall opening, the at least one shaft (2) having a reduced cross-sectional area at least in sections, in particular wherein a plurality of shafts (2) are being arranged one above the other in the region of the wall opening and each being aligned horizontally, at least one shaft (2) having a reduced cross-sectional area at least in sections along its circumferential contour, wherein
- a plurality of cover elements (3) are fixed in a non-rotatable manner to the at least one horizontally aligned shaft (2) and
- wherein at least one shaft (2) is bearingly supported in a partial section with reduced cross-sectional area.

14. The method as recited in claim 13, wherein the at least one shaft (2) is constructed in such a way that it has a first number of bearing sections with a reduced cross-sectional area, which first number of bearing sections correlates with a second number of stabilizing vertical frame elements (8) of the functional building, wherein the stabilizing vertical frame elements (8) are arranged in the area of the wall opening of the functional building or laterally limit the wall opening of the functional building.

15. The method as recited in claim 13 or 14, wherein the at least one shaft (2) is assembled on the functional building on the construction site, in particular wherein the at least one shaft (2) is assembled on the construction site from first sub-sections (100) with a first cross-sectional area (Q100) and second sub-sections (101) with a second cross-sectional area (Q101) and with terminal flanges (25, 28), wherein the second cross-sectional area (Q101) is smaller than the first cross-sectional area (Q100), and wherein the at least one shaft (2) is mounted in the region of the second partial sections (101), in particular wherein the second partial sections (101) are provided prefabricated as prefabricated structural parts with a bearing (40) and mounting (7).

## Revendications

1. Construction d'aération (1) pour une ouverture murale d'un bâtiment fonctionnel, comprenant
- au moins un arbre (2) aligné horizontalement,
- une pluralité d'éléments de recouvrement (3) qui sont disposés de manière solidaire en rotation sur ledit au moins un arbre (2) aligné horizontalement,
- au moins un palier (40) pour la fixation rotative dudit au moins un arbre (2) sur le bâtiment fonctionnel;
**caractérisée par le fait**
- **que** ledit au moins un arbre (2) présente, au moins par sections, une aire de section transversale réduite, et
- **que** ledit au moins un palier (40) est disposé dans le tronçon de l'arbre (2) ayant une aire de section transversale réduite.

2. Construction d'aération (1) selon la revendication 1, dans laquelle
- ledit au moins un arbre (2) comprend au moins un premier tronçon (100) ayant une première aire de section transversale (Q100),
- dans laquelle ledit arbre (2) comprend au moins un deuxième tronçon (101) ayant une deuxième aire de section transversale (Q101),
- dans laquelle la deuxième aire de section transversale (Q101) est plus petite que la première aire de section transversale (Q100),
- dans laquelle ledit au moins un palier (40) est disposé au niveau d'un deuxième tronçon (101) sur l'arbre (2).

3. Construction d'aération (1) selon la revendication 1 ou 2, dans laquelle ledit au moins un arbre (2) aligné horizontalement est conçu de manière plane, au moins par sections, le long d'un tracé circonférentiel du premier tronçon (100).

4. Construction d'aération (1) selon l'une quelconque des revendications précédentes, dans laquelle la construction d'aération (1) comprend une pluralité d'arbres (2) qui sont superposés et chacun alignés horizontalement et qui sont équipés chacun d'éléments de recouvrement (3) et/ou dans laquelle lesdits éléments de recouvrement (3) sont fixés de manière excentrique sur ledit au moins un arbre (2), en particulier dans laquelle une zone supérieure (3o) de chaque élément de recouvrement (3) présente une hauteur (H3o) plus petite et/ou une aire de section transversale plus petite qu'une zone inférieure (3u) de chaque élément de recouvrement (3) et/ou dans laquelle les éléments de recouvrement (3) sont fixés chacun au niveau d'un premier tronçon (100) dudit au moins un arbre (2).

5. Construction d'aération (1) selon l'une quelconque des revendications précédentes, dans laquelle ledit au moins un premier tronçon (100) ayant, au moins par sections, un tracé circonférentiel plan est formée par un premier élément profilé (22), dans laquelle ledit premier élément profilé (22) présente une pluralité de surfaces latérales extérieures planes, en particulier dans laquelle le premier élément profilé (22) est un profilé carré (24).

6. Construction d'aération (1) selon la revendication 5, dans laquelle ledit au moins un arbre (2) est formé d'au moins deux premiers éléments profilés (22) qui sont disposés en alignement et entre lesquels est disposé en alignement au moins un deuxième élément profilé (26) formant le deuxième tronçon (101), en particulier dans laquelle ledit au moins un arbre (2) est formé d'une pluralité de premiers éléments profilés (22) disposés en alignement, respectivement au moins un deuxième élément profilé (26) étant disposé en alignement entre deux premiers éléments profilés (22) adjacents et dans laquelle ledit au moins un arbre (2) est supporté au niveau dudit au moins un deuxième élément profilé (26).

7. Construction d'aération (1) selon l'une quelconque des revendications précédentes, dans laquelle au moins un élément de maintien (13) pour un élément de recouvrement (3) est disposé sur un tronçon réalisé de manière plane du tracé circonférentiel, en particulier dans laquelle au moins un élément de maintien (13) pour un élément de recouvrement (3) est disposé sur une surface latérale extérieure (23) plane d'un premier élément profilé (22).

8. Construction d'aération (1) selon la revendication 7, dans laquelle l'élément de maintien (13) présente au moins un contour qui correspond à un contour de l'élément de recouvrement (3) et/ou dans laquelle l'élément de maintien (13) est réalisé entre deux éléments de recouvrement (3) disposés en alignement, pour évacuer de la pluie et/ou de l'humidité.

9. Construction d'aération (1) selon l'une quelconque des revendications précédentes, dans laquelle la construction d'aération (1) comprend au moins un mécanisme d'entraînement (9) destiné à entraîner de manière mobile en rotation ledit au moins un arbre (2).

10. Construction d'aération (1) selon la revendication 9, dans laquelle la construction d'aération comprend au moins deux arbres (2) superposés et alignés chacun horizontalement et comprenant des éléments de recouvrement (3), dans laquelle un couplage mécanique d'un arbre (2) relié directement au mécanisme d'entraînement (9) avec au moins un autre arbre (2) se fait par le biais d'un premier élément de cadre (11) disposé perpendiculairement et déplaçable verticalement et de deuxièmes éléments de cadre (12), les deuxièmes éléments de cadre (12) étant disposés chacun entre le premier élément de cadre (11) et un élément profilé, en particulier le deuxième élément profilé (26) de chaque arbre (2), et étant reliés à pivotement à ceux-ci.

11. Bâtiment fonctionnel comprenant au moins une ouverture murale et une construction d'aération (1) qui obture ladite ouverture murale, la construction d'aération (1) comprenant
- au moins un arbre (2) aligné horizontalement, en particulier une pluralité d'arbres (2) superposés et alignés chacun horizontalement,
- une pluralité d'éléments de recouvrement (3) qui sont disposés de manière solidaire en rotation sur ledit au moins un arbre (2) aligné horizontalement,
- au moins un palier (40) pour la fixation rotative dudit au moins un arbre (2) sur le bâtiment fonctionnel;
**caractérisé par le fait**
- **que** ledit au moins un arbre (2) présente, au moins par sections, une aire de section transversale réduite, et
- **que** ledit au moins un palier (40) est disposé dans un tronçon de l'arbre (2) ayant une aire de section transversale réduite.

12. Bâtiment fonctionnel selon la revendication 11, dans lequel le bâtiment fonctionnel est réalisé en construction de traverse ou en construction à ossature et comprend une pluralité d'éléments de traverse (8) de support disposés verticalement, le bâtiment fonctionnel comprenant en outre une construction d'aération (1) selon l'une quelconque des revendications 2 à 10, dans laquelle les distances moyennes entre les deuxièmes tronçons (101) dudit au moins un arbre (2) correspondent aux distances moyennes des éléments de traverse (8) verticaux et dans lequel au moins deux supports (7) sont prévus pour supporter un arbre (2), qui sont disposés au niveau d'au moins deux deuxièmes tronçons (101) sur au moins deux éléments de traverse (8) verticaux du bâtiment fonctionnel.

13. Procédé pour installer et/ou faire fonctionner une construction d'aération (1) pour une ouverture murale d'un bâtiment fonctionnel, dans lequel
- au moins un arbre (2) est disposé et aligné horizontalement au niveau de ladite ouverture murale, dans lequel ledit au moins un arbre (2) présente, au moins par sections, une aire de section transversale réduite, en particulier dans lequel plusieurs arbres (2) sont superposés et sont chacun alignés horizontalement au niveau de l'ouverture murale, dans lequel au moins un arbre (2) présente une aire de section transversale réduite, au moins par sections, le long de son tracé circonférentiel, dans lequel
- une pluralité d'éléments de recouvrement (3) sont fixés de manière solidaire en rotation sur ledit au moins un arbre (2) aligné horizontalement, et
- dans lequel au moins un arbre (2) est supporté dans un tronçon ayant une aire de section transversale réduite.

14. Procédé selon la revendication 13, dans lequel ledit au moins un arbre (2) est construit de telle sorte qu'il présente un premier nombre de zones de support à aire de section transversale réduite qui sont corrélées à un deuxième nombre d'éléments de traverse (8) verticaux stabilisateurs du bâtiment fonctionnel, dans lequel les éléments de traverse (8) verticaux stabilisateurs sont disposés au niveau de l'ouverture murale du bâtiment fonctionnel ou délimitent latéralement l'ouverture murale du bâtiment fonctionnel.

15. Procédé selon la revendication 13 ou 14, dans lequel ledit au moins un arbre (2) est monté sur site sur le bâtiment fonctionnel, en particulier dans lequel ledit au moins un arbre (2) est assemblé sur site à partir de premiers tronçons (100) ayant une première aire de section transversale (Q100) et de deuxièmes tronçons (101) ayant une deuxième aire de section transversale (Q101) et de brides terminales (25, 28), dans lequel la deuxième aire de section transversale (Q101) est inférieure à la première aire de section transversale (Q100), et dans lequel ledit au moins un arbre (2) est supporté au niveau des deuxièmes tronçons (101), en particulier dans lequel les deuxièmes tronçons (101) sont fournis de manière préfabriquée en tant que partie de construction préfabriquée ayant un palier (40) et un support (7).
